# EUROPÄISCHE PATENTSCHRIFT

(11) **EP 3 552 931 B1**
(45) Veröffentlichungstag und Bekanntmachung des Hinweises auf die Patenterteilung: **23.09.2020**
(21) Anmeldenummer: 19161269.6
(22) Anmeldetag: 07.03.2019
(51) Int. Cl.: B62D 55/28

(54) **STEIGHILFE**
CLIMBING AID
AIDE À LA MONTÉE

(30) Priorität: 21.03.2018 AT 502372018
(43) Veröffentlichungstag der Anmeldung: 16.10.2019
(73) Patentinhaber: Hettegger, Rupert, 5611 Grossari (AT)
(72) Erfinder: Hettegger, Rupert, 5611 Grossari (AT)
(74) Vertreter: Fabian, Ferdinand

(56) Entgegenhaltungen:
- CN-U- 205 574 091
- DE-U1-202012 100 868
- US-A- 2 701 169
- US-B1- 7 901 015

## Beschreibung

Die Erfindung betrifft eine Steighilfe für eine Maschine mit einer Raupenkette, umfassend einen Grundkörper, der aus miteinander an einem Überlappstoß verbundenen Profilelementen gebildet ist, wobei die Profilelemente ein Trägerprofil aufweisen, auf dem ein Steighilfe-Profilelement angeordnet ist, das über das Trägerprofil vorragt, und wobei die Profilelemente des Grundkörpers im Bereich des Überlappstoßes formschlüssig miteinander verbunden sind. Weiter betrifft die Erfindung eine Raupenkette für eine Maschine, mit Kettenplatten, die eine Oberseite aufweisen, wobei die Oberseite eine Profilierung mit Erhebungen aufweist, sowie mit zumindest einer Steighilfe, die zwischen zwei Erhebungen der Profilierung der Oberseite der Kettenplatten angeordnet ist, und U-förmige Halteelemente zur Anordnung der Steighilfe auf der Raupenkette aufweist, die die Seitenränder der Kettenplatten umgreifen.

Die Bodenhaftung von Raupenfahrzeugen, wie beispielsweise Baggern, leidet bei schlechten Bodenverhältnissen bzw. steilen Geländen, weil sich die Zwischenräume zwischen den vorstehenden Querstegen der Kettenplatten der Raupenkette innerhalb kurzer Zeit mit aufgenommenem Material füllen und dann nicht mehr in den Boden eindringen, sodass sie unwirksam werden. Um diesem Umstand Rechnung zu tragen, wurden im Stand der Technik bereits Steighilfen vorgeschlagen. So ist beispielsweise aus der DE 20 2012 100 868 U1 eine Gleitschutzvorrichtung für eine Raupenkette bekannt, deren Kettenplatten vorstehende, quer zur Kettenlängsrichtung verlaufende Stege aufweisen, mit Trägern für über die Stege vorstehende Stollen zwischen je zwei benachbarten Stegen ausgewählter Kettenplatten, wobei die Träger jeweils zwei die Seitenränder der Kettenplatten umgreifende, miteinander lösbar verbundene, U-förmige Halterungen bilden. Die U-förmigen Halterungen der Träger umfassen einander in Trägerlängsrichtung der Höhe nach überlappende und im Überlappungsbereich mit gegen die zugehörige U-förmige Halterung abfallenden Keilflächen aneinander liegende Schenkel, die im Überlappungsbereich über eine Langlochverbindung verschraubt sind. Dokument DE 20 2012 100 868 U1 offenbart den Oberbegriff des Anspruchs 1.

Der vorliegenden Erfindung liegt die Aufgabe zugrunde, eine derartige Gleitschutzvorrichtung hinsichtlich der mechanischen Belastbarkeit zu verbessern.

Diese Aufgabe der Erfindung wird bei der eingangs Steighilfe dadurch gelöst, dass für die Ausbildung der formschlüssigen Verbindung der Profilelemente, zumindest eines dieser Profilelemente stirnseitig eine Ausnehmung aufweist und die Profilelemente im Bereich dieser Ausnehmung ineinandergeschoben sind.

Weiter wird die Aufgabe der Erfindung mit der eingangs genannten Raupenkette gelöst, bei der die Steighilfe erfindungsgemäß ausgebildet ist.

Von Vorteil ist dabei, dass durch das Ineinanderschieben der beiden Profilelemente, der dadurch erzeugte Formschluss eine höhere Quersteifigkeit aufweist, wodurch die Steighilfe, nachdem sie mit ihrer Längserstreckung quer zur Fahrtrichtung montiert ist, höheren Kräften in Fahrtrichtung ausgesetzt werden kann. Zudem kann mit diesem Formschluss eine höhere Sicherheit der Verbindung der beiden Profilelemente im Überlappstoß gegen unbeabsichtigtes Lösen im Betrieb der Steighilfe erreicht werden, da eine Relativbewegung der Profilelemente in Fahrtrichtung zueinander besser verhindert werden kann. Darüber hinaus ist dieser Formschluss in der Produktion der Steighilfe einfach darstellbar.

Gemäß einer bevorzugten Ausführungsvariante der Steighilfe kann vorgesehen sein, dass beide den Formschluss ausbildende Profilelemente stirnseitig eine Ausnehmung aufweisen, wodurch die Tiefe der Ausnehmungen (in Längsrichtung der Steighilfe betrachtet) in den einzelnen Profilelementen geringer ausgeführt sein kann. Es kann damit eine geringere Materialschwächung in den Profilelementen durch die Ausnehmung erreicht werden.

Nach einer weiteren bevorzugten Ausführungsvariante der Steighilfe kann vorgesehen sein, dass eine Ausnehmung der formschlüssigen Verbindung in einem der Trägerprofile und die weitere Ausnehmung in einem der Steighilfe-Profilelemente ausgebildet ist. Diese Ausführungsvariante erlaubt eine konstruktiv einfache Lösung des Formschlusses mit bereits vorhandenen Elementen der Steighilfe.

Es kann nach einer anderen Ausführungsvariante der Steighilfe auch vorgesehen sein, dass die Profilelemente im Überlappstoß flach aneinander anliegen, wodurch der Überlappstoß der Profilelemente einfacher ausgeführt sein kann.

Zur Erhöhung der mittels des Form- und/oder Kraftschlusses übertragbaren Kräfte in Verbindungsbereichen der Steighilfe kann vorgesehen sein, dass die den Überlappstoß bildenden Oberflächen und/oder die den Formschluss ausbildenden Oberflächen der Profilelemente mit einer reibungserhöhenden Beschichtung versehen sind.

Zum besseren Verständnis der Erfindung wird diese anhand der nachfolgenden Figur näher erläutert.

Es zeigt in vereinfachter, schematischer Darstellung:
- Fig.1: eine Steighilfe in Seitenansicht;
- Fig.2: die Steighilfe nach Fig. 1 in Draufsicht;
- Fig.3: die Steighilfe nach Fig. 1 in Schrägansicht;
- Fig.4: einen Ausschnitt aus der Steighilfe im Verbindungsbereich der Steighilfe mit getrennten Profilelementen;
- Fig. 5: einen Ausschnitt aus einer Ausführungsvariante der Steighilfe im Verbindungsbereich mit getrennten Profilelementen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

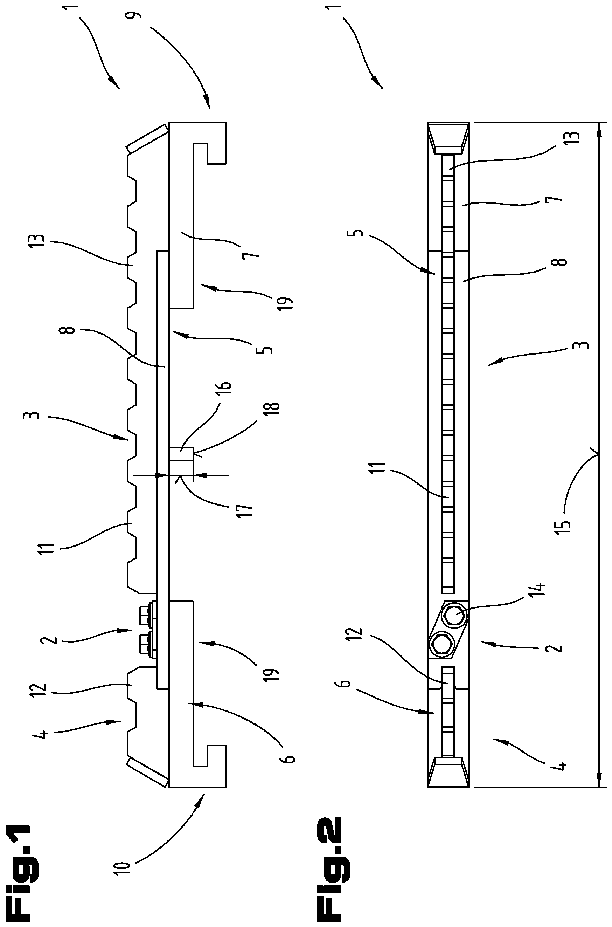

In den Fig. 1 bis 3 ist eine bevorzugte Ausführungsvariante einer Steighilfe 1 dargestellt. Die Steighilfe 1, auch als Gleitschutzvorrichtung bezeichenbar, ist für eine nicht dargestellte Raupenkette einer Maschine, wie beispielsweise einen Bagger oder eine Pistenraupe, vorgesehen. Derartige Raupenketten weisen aus miteinander über Gelenkbolzen gelenkig verbundene Kettenglieder und auf diesen Kettengliedern aufgeschraubten Kettenplatten auf. Die Kettenplatten weisen an einer Oberseite, die mit dem Boden, auf dem die Maschine steht, in Berührung kommt, eine Profilierung mit Erhebungen auf, beispielsweise mit quer zur Kettenlängsrichtung verlaufenden, vorstehende Stege. Die Profilierung kann aber auch anders ausgeführt sei, allerdings mit der Einschränkung, dass die Profilierung die Montage der Steighilfe auf der Raupenkette nicht stört.

Prinzipiell sind derartige Raupenketten aus dem Stand der Technik bekannt. Es sei dazu beispielsweise auf Fig. 1 der voranstehend genannten DE 20 2012 100 868 U1 verwiesen.

Bei aufgeweichten oder gefrorenen Böden kann die Raupenkette unter Umständen nur einen unzureichenden Halt aufweisen. Zur Verbesserung dieses Halts kann die Steighilfe 1 an der Raupenkette montiert werden. Die Steighilfe 1 wird dazu zwischen zwei Erhebungen, beispielsweise zwischen zwei unmittelbar benachbarten, quer zur Fahrtrichtung verlaufenden Stegen, der Profilierung angeordnet.

Die Steighilfe 1 umfasst einen bzw. besteht aus einem Grundkörper, der aus miteinander an einem Überlappstoß 2 verbundenen Profilelementen 3, 4 gebildet ist.

Prinzipiell können auch mehr als zwei Profilelemente 3, 4 vorgesehen werden, beispielsweise drei oder vier, sodass auch mehr al ein Überlappstoß 2 ausgebildet sein kann. Die Ausführung mit nur zwei Profilelementen 3, 4 ist jedoch die bevorzugte.

Das erste Profilelemente 3 weist ein erstes Trägerprofil 5 und das zweite Profilelemente 4 ein zweites Trägerprofil 6 auf. Das erste Trägerprofil 5 ist in der dargestellten Ausführungsvariante zweigeteilt ausgeführt, und weist auf einem ersten Trägerprofilteil 7 ein zweites Trägerprofilteil 8 auf, das mit dem ersten Trägerprofilteil 7 verbunden ist, insbesondere stoffschlüssig verbunden ist, vorzugsweise durch Schweißen verbunden ist.

Da zweite Trägerprofil 5 ist vorzugsweise einteilig ausgeführt, kann aber auch mehrere Teile aufweisen.

In den Seitenbereichen weisen die beiden Trägerprofile 5, 6 Haltelemente 9, 10 auf, die vorzugsweise einstückig mit den Trägerprofilen 5, 6 ausgebildet sind. Diese Halteelemente 9, 10 sind insbesondere U-förmig ausgebildet, sodass die beiden Trägerprofile 5, 6 die Seitenbereiche der jeweilige Kettenplatte, an der die Steighilfe 1 angeordnet ist, beidseitig umgreifend angeordnet werden können.

Die beiden Trägerprofile 5, 6 sind vorzugsweise aus einem Flachstahl durch entsprechendes Umformen hergestellt, können zumindest teilweise aber auch nach einem anderen Verfahren, z.B. einem Gussverfahren, hergestellt worden sein.

Auf dem ersten Trägerprofil 5 ist ein erstes Steighilfe-Profilelement 11 und auf dem zweiten Trägerprofil 6 ist ein zweites Steighilfe-Profilelement 12 angeordnet. Die beiden Steighilfe-Profilelement 11, 12 sind mit dem jeweiligen Trägerprofil 5, 6 verbunden, insbesondere stoffschlüssig verbunden, vorzugsweise verschweißt. Insbesondere sind die beiden Steighilfe-Profilelemente 11, 12 um 90 ° gedreht auf dem jeweiligen Trägerprofil 5, 6 angeordnet, liegen also mit einer Seitenstirnfläche auf den Trägerprofilen 5, 6 auf, wie dies aus den Figuren 1 bis 3 ersichtlich ist.

Die beiden Steighilfe-Profilelemente 11, 12 sind insbesondere ebenfalls aus einem Flachmaterial durch spanendes Bearbeiten hergestellt, könne auch nach einem anderen Verfahren, z.B. einem Gussverfahren, hergestellt worden sein. Sie weisen jeweils eine Profilierung mit Erhebungen 13 auf und überragen die Trägerprofile 5, 6 in vertikaler Richtung. Mithilfe dieser Profilierung, die auch die Profilierung der Kettenplatten in vertikaler Richtung überragt, findet de Raupenkette im Betrieb einen besseren Halt, da sie sich weiter in den Boden eingraben kann.

Es sei darauf hingewiesen, dass die in den Figuren 1 bis 3 dargestellte Form der Profilierung der Steighilfe-Profilelemente 11, 12 keinen einschränkenden Charakter hat, sondern auch anders ausgeführt sein kann, beispielsweise, mit dreieckförmigen Erhebungen, etc.

Des Weiteren sei der Vollständigkeit halber erwähnt, dass an der Raupenkette übelicherweise mehr als eine Steighilfe 1 montiert wird. Da vorzugsweise alle Steighilfen gleich ausgebildet sind, wird in dieser Beschreibung nur eine Steighilfe 1 beschrieben. Diese Ausführungen können aber auch auf die weiteren Steighilfen 1 der Raupenkette angewandt werden.

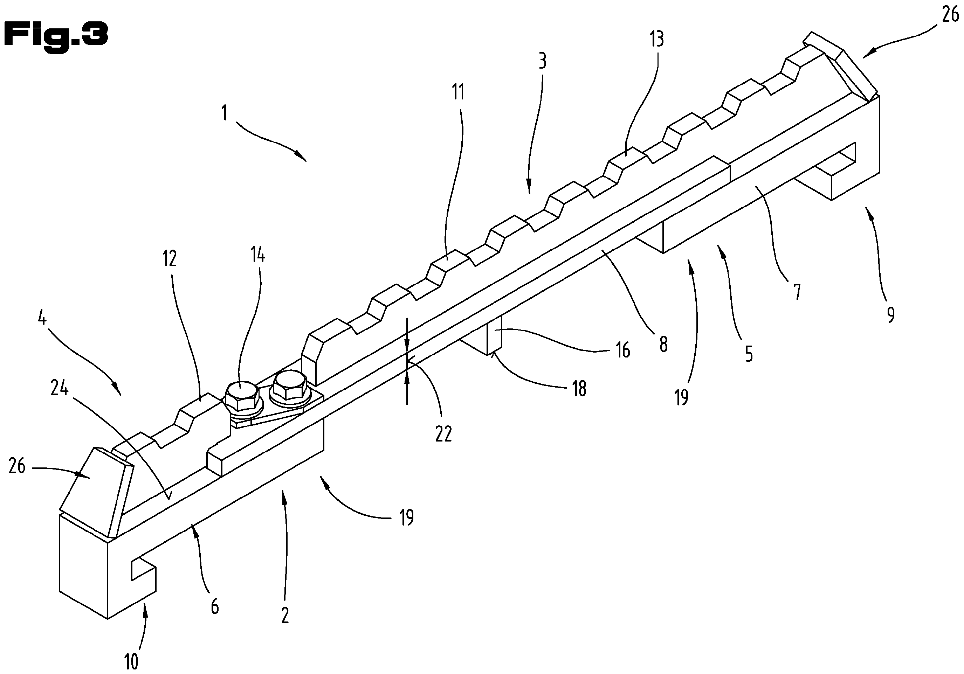

Im Überlappstoß 2 sind die beiden Profilelemente 3, 4 miteinander verbunden. Vorzugsweise sind sie miteinander über Schrauben 14 miteinander verschraubt. Insbesondere werden zwei Schrauben 14 vorgesehen. Vorzugsweise sind diese diagonal zueinander versetzt angeordnet, wie dies aus den Fig. 2 und 3 ersichtlich ist. Es kann damit eine höhere Sicherheit der Verschraubung erreicht werden.

Die Verschraubung kann mittels Muttern oder mittels Gewinde in dem jeweils unten angeordneten Profilelement 4 ausgeführt sein.

Vorzugsweise erfolgt die Verschraubung der beiden Profilelemente 3, 4 miteinander außermittig (bezogen auf eine Längserstreckung 15 der Steighilfe 1). Sie kann aber auch mittig ausgeführt sein.

Es kann weiter vorgesehen sein, dass an der Unterseite des ersten Trägerprofils 5 zumindest ein Stützprofil 16 angeordnet und mit dem ersten Trägerprofil 5 verbunden ist, über das sich die Steighilfe 1 zusätzlich an der Oberseite des Kettenplatte der Raupenkette abstützen kann. Bei nur einem Stützprofil 16 ist dieses zumindest annähernd mittig (bezogen auf die Längserstreckung 16) an der Steighilfe 1 angeordnet.

Bei Bedarf können auch zwei oder drei oder mehr Stützprofile 16 vorgesehen werden.

Eine Höhe 17 des zumindest einen Stützprofils 16 richtet sich dabei nach der Materialstärke der Trägerprofile 5, 6. Eine Stirnfläche 18 des zumindest einen Stützprofils 16 ist zumindest annähernd fluchtend mit einer Unterseite 19 (neben den U-förmigen Haltelementen 9, 10) der Trägerprofile 5, 6 angeordnet.

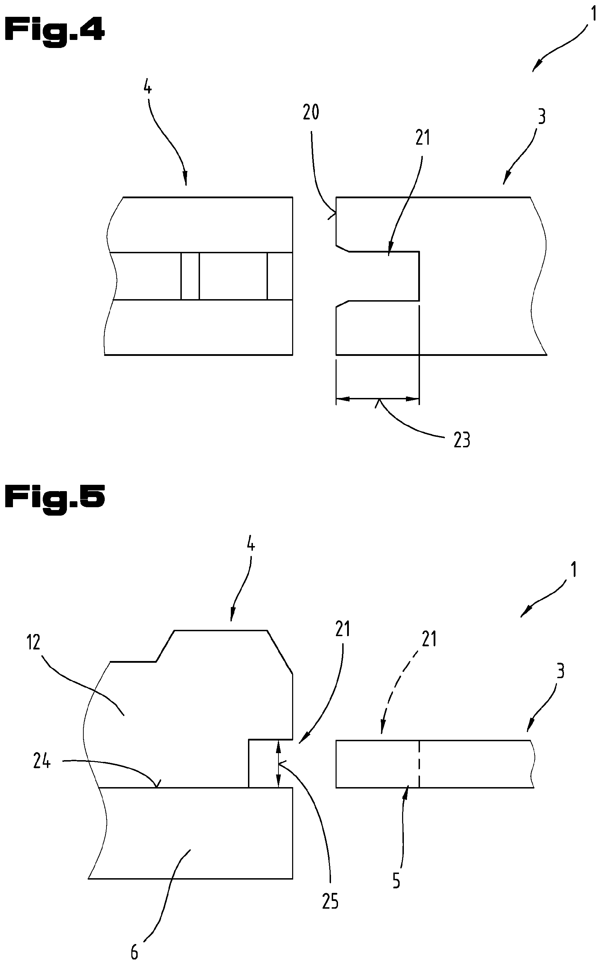

Zusätzlich zur kraftschlüssigen Verbindung der Profilelemente 3, 4 im Überlappstoß 2 sind diese formschlüssig miteinander verbunden. Dazu ist in zumindest einem der beiden Profilelemente 3, 4 in einer Stirnseite 21 eine Ausnehmung 21 vorgesehen, wie dies die in Fig. 4 dargestellte Draufsicht auf einen Ausschnitt aus der Steighilfe 1 zeigt. In der dargestellten Ausführungsvariante der Steighilfe 1 ist die Ausnehmung 21 ausschließlich in der ersten Profilteil 3 ausgebildet. Die Ausnehmung 21 kann alternativ aber auch ausschließlich im zweiten Profilteil 4 ausgebildet sein.

Die beiden Profilteile 3, 4 sind im Bereich der Ausnehmung 21 zur Ausbildung des Formschlusses ineinandergeschoben, wie dies z.B. aus Fig. 3 ersichtlich ist.

Die Ausnehmung 21 erstreckt sich bei der Ausführungsvariante der Steighilfe 1 nach Fig. 4 durch eine gesamte Dicke 22 (Fig. 3) des Trägerprofils 3 im Bereich des Formschlusses (in vertikaler Richtung betrachtet). Weiter erstreckt sich die Ausnehmung 21 in Richtung der Längserstreckung 15 (Fig. 2) der Steighilfe 1 beginnend an der Stirnseite 20 des ersten Profilteils 3 über eine Tiefe 23. Die Größe der Tiefe 23 kann an die jeweiligen Erfordernisse der Steighilfe 1 angepasst sein und beispielsweise zwischen 2 % und 10 % der Gesamtlänge der Steighilfe 1 in Richtung der Längserstreckung 15 betragen.

Die Form der Ausnehmung 21 richtet sich nach der Form des zweiten Profilteils 4 in dem Bereich, in dem dieser in die Ausnehmung 21 hineingeschoben wird. Beispielsweise kann die Ausnehmung eine rechteckförmige Form - in Draufsicht betrachtet - aufweisen.

Entsprechendes gilt, wenn die Ausnehmung 21 ausschließlich in dem zweiten Profilteil 4 ausgebildet ist.

Gemäß einer Ausführungsvariante der Steighilfe 1 kann auch vorgesehen sein, dass beide den Formschluss ausbildende Profilelemente 3, 4 stirnseitig je eine Ausnehmung 21 aufweisen, wie dies in Fig. 5 dargestellt ist, die in Seitenansicht einen Ausschnitt aus einer weiteren Ausführungsvariante der Steighilfe 1 zeigt. Es gelten in diesem Fall für beiden Ausnehmungen 21 das voranstehenden Ausführungen, wobei sich jedoch die (Gesamt) Tiefe 23 (Fig. 4) der Ausnehmung 21 nun auf zwei Ausnehmungen 21 aufteilt. Die Aufteilung kann beispielsweise ausgewählt sein aus einem Bereich von 60 : 40 bis 40 : 60, und z.B. 50 : 50 betragen. Die Zahlen sind dabei in % bezogen auf die Gesamttiefe der Ausnehmungen in horizontaler Richtung.

Prinzipiell kann der Formschluss zwischen den beiden Profilteilen 3, 4 über die zumindest eine Ausnehmung 21 an stirnseitig jeder geeigneten Stelle ausgebildet sein. Beispielsweise kann die Ausnehmung 21 im Trägerprofil 6 des zweiten Profilteils 4 ausgebildet sein. Das Trägerprofil 5 des ersten Profilteils 3 kann zur Ausbildung des Formschlusses einen vertikal nach unten vorragenden Steg aufweisen, der in die Ausnehmung 21 des Trägerprofils 6 des zweiten Profilteils 3 eingreift.

In der bevorzugten Ausführungsvariante der Steighilfe 1 ist jedoch eine Ausnehmung 21 der formschlüssigen Verbindung in einem der Trägerprofile 5, 6 und die weitere Ausnehmung 21 in einem der Steighilfe-Profilelemente 11, 12 ausgebildet ist. In der konkret in Fig. 5 dargestellten Ausführungsvariante der Steighilfe 1 ist eine Ausnehmung 21 im Trägerprofil 5 des ersten Profilteils 3 und die zweite Ausnehmung 21 im Steighilfe-Profilelement 12 des zweiten Profilteils 4. Die Ausnehmung 21 im Steighilfe-Profilelement 12 erstreckt sich dabei von der Aufstandsfläche 24 (auch aus Fig. 3 ersichtlich) auf dem Trägerprofil 6 des zweiten Profilelements 4 über eine vertikale Höhe 25, die zumindest annähernd der Dicke 22 des Trägerprofils 5 des ersten Profilelements 3 in diesem Bereich entspricht.

Mit "zumindest annähernd der Dicke 22 entspricht" ist gemeint, dass die Höhe 25 so bemessen ist, dass das Ineinanderschieben der beiden Profilelemente 3, 4 möglich ist und gleichzeitig der Formschluss zwischen den Profilelementen 3, 4 ausgebildet wird. Die Höhe 25 wird also nur geringfügig größer sein als die Dicke 22.

Nach einer anderen Ausführungsvariante der Steighilfe 1, die in den Fig. 1 bis 3 ebenfalls dargestellt ist, kann vorgesehen sein, dass die Profilelemente 3, 4 im Überlappstoß 2 flach aneinander anliegen.

Es besteht jedoch auch die Möglichkeit der Ausbildung eines zusätzlichen Formschlusses zwischen den beiden Profilelementen 3, 4 über Keilflächen, wie dies in der voranstehend genannten DE 20 2012 100 868 U1 ausgeführt ist, auf die in diesem Zusammenhang zur Vermeidung von Wiederholungen Bezug genommen wird.

Nach einer weiteren Ausführungsvariante der Steighilfe 1 kann vorgesehen sein, dass die den Überlappstoß 2 bildenden Oberflächen und/oder die den Formschluss ausbildenden Oberflächen der Profilelemente 3, 4 mit einer reibungserhöhenden Beschichtung versehen sind. Diese Beschichtung kann beispielsweise kunstharzbasierend ausgeführt sein, z.B. ein Lack sein. In der Beschichtung können zur Erhöhung der Reibung Hartpartikel, wie beispielsweise Korundpartikel oder Diamantpartikel, etc..

Sollte die Steighilfe 1, wie voranstehend ausgeführt, mehr als zwei Profileelemente 3, 4 aufweisen, gelten die voranstehenden Ausführungen zur Verbindung der beiden Profilelemente 3, 4 auch für die, die Anzahl zwei übersteigenden Anzahl an Profilelementen. Beispielsweise könnte - wenngleich nicht bevorzugt - der in den Fig. 1 bis 3 dargestellte rechte Überlappstoß wie der dargestellte und beschriebene linke Überlappstoß 2 mit dem stirnseitigen Formschluss zwischen den Profilelementen 3, 4 ausgeführt sein.

Zur relativen Verstellbarkeit der Profilelemente 3, 4 in der Längserstreckung 15 der Steighilfe 1 zueinander, kann in einem der Profilelemente 3, 4 zumindest ein Langloch vorgesehen sein, wie dies in der DE 20 2012 100 868 U1 beschrieben ist.

Zur Montage der Steighilfe 1 werden zunächst die beiden U-förmigen Halteelemente 9, 10 von gegenüberliegenden Seiten auf die Seitenränder der Kettenplatten zwischen zwei benachbarten Erhebungen der Profilierung der Kettenplatten aufgeschoben und dann die beiden Profilelemente 3, 4 zur Ausbildung des Formschlusses ineinander geschoben. Anschließend werden die beiden Profilelemente 3, 4 im ausgebildeten Überlappstoß mit zumindest einer Schraube 14 miteinander verschraubt.

Ergänzend zu den Erhebungen 13 der Steighilfe-Profilelemente 11, 12 können für besonders harte Winterbedingungen Eiskrallen vorgesehen werden. Diese Eiskrallen können beispielsweise plattenförmig ausgebildet sein, und an ihrem vorderen Ende mit zu den Erhebungen 13 der Steighilfe-Profilelemente 11, 12 ähnlichen Erhebungen ausgebildet sein. Die Eiskrallen können zumindest orthogonal zu den Steighilfe-Profilelementen 11, 12 auf den Steighilfe-Profilelementen 11, 12 angeordnet werden.

Es ist weiter möglich, in den Seitenbereichen der Steighilfe plattenförmige Schutzelemente 26 anzuordnen und mit den Steighilfe-Profilelementen 11, 12 und/oder den Trägerprofilen 5, 6 zu verbinden, wie dies beispielsweise aus Fig. 3 ersichtlich ist. Diese Schutzelemente 26 können beispielsweise eine trapezförmig ausgebildet sein.

Gegebenenfalls kann die beschriebene trennbare formschlüssige Verbindung der beiden Profilelementen 3, 4 miteinander im Formschluss zusätzlich auch kraftschlüssig ausgeführt sein.

Die Ausführungsbeispiele zeigen bzw. beschreiben mögliche Ausführungsvarianten der Steighilfe 1, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus der Steighilfe 1diese bzw. deren Bestandteile nicht zwingenderweise maßstäblich dargestellt sind.

### Bezugszeichenaufstellung

- 1: Steighilfe
- 2: Überlappstoß
- 3: Profilelement
- 4: Profilelement
- 5: Trägerprofil

- 6: Trägerprofil
- 7: Trägerprofilteil
- 8: Trägerprofilteil
- 9: Halteelement
- 10: Halteelement

- 11: Steighilfe-Profilelement
- 12: Steighilfe-Profilelement
- 13: Erhebung
- 14: Schraube
- 15: Längserstreckung

- 16: Stützprofil
- 17: Höhe
- 18: Stirnfläche
- 19: Unterseite
- 20: Stirnseite

- 21: Ausnehmung
- 22: Dicke
- 23: Tiefe
- 24: Aufstandsfläche
- 25: Höhe

- 26: Schutzelement

## Patentansprüche

1. Steighilfe (1) für eine Maschine mit einer Raupenkette, umfassend einen Grundkörper, der aus miteinander an einem Überlappstoß (2) verbundenen Profilelementen (3, 4) gebildet ist, wobei die Profilelemente (3, 4) ein Trägerprofil (5, 6) aufweisen, auf dem ein Steighilfe-Profilelement (11, 12) angeordnet ist, das über das Trägerprofil (5, 6) vorragt, und wobei die Profilelemente (3, 4) des Grundkörpers im Bereich des Überlappstoßes (2) formschlüssig miteinander verbunden sind, **dadurch gekennzeichnet, dass** für die Ausbildung der formschlüssigen Verbindung der Profilelemente (3, 4), zumindest eines dieser Profilelemente (3, 4) stirnseitig eine Ausnehmung (21) aufweist und die Profilelemente (3, 4) im Bereich dieser Ausnehmung (21) ineinandergeschoben sind.

2. Steighilfe (1) nach Anspruch 1, **dadurch gekennzeichnet, dass** beide den Formschluss ausbildende Profilelemente (3, 4) stirnseitig eine Ausnehmung (21) aufweisen.

3. Steighilfe (1) nach Anspruch 2, **dadurch gekennzeichnet, dass** eine Ausnehmung (21) der formschlüssigen Verbindung in einem der Trägerprofile (5, 6) und die weitere Ausnehmung (21) in einem der Steighilfe-Profilelemente (11, 12) ausgebildet ist.

4. Steighilfe (1) nach Anspruch 1 oder 2, **dadurch gekennzeichnet, dass** die Profilelemente (3, 4) im Überlappstoß (2) flach aneinander anliegen.

5. Steighilfe (1) nach einem der Ansprüche 1 bis 3, **dadurch gekennzeichnet, dass** die den Überlappstoß (2) bildenden Oberflächen und/oder die den Formschluss ausbildenden Oberflächen der Profilelemente (3, 4) mit einer reibungserhöhenden Beschichtung versehen sind.

6. Raupenkette für eine Maschine, mit Kettenplatten, die eine Oberseite aufweisen, wobei die Oberseite eine Profilierung mit Erhebungen aufweist, sowie mit zumindest einer Steighilfe (1), die zwischen zwei Erhebungen der Profilierung der Oberseite der Kettenplatten angeordnet ist, und U-förmige Halteelemente (9, 10) zur Anordnung der Steighilfe (1) auf der Raupenkette aufweist, die die Seitenränder der Kettenplatten umgreifen, **dadurch gekennzeichnet, dass** die Steighilfe (1) nach einem der vorhergehenden Ansprüche gebildet ist.

## Claims

1. A climbing aid (1) for a machine having a continuous track, comprising a base body, which is formed of profile elements (3, 4) connected to one another on a lap joint (2), wherein the profile elements (3, 4) have a girder section (5, 6), on which a climbing aid profile element (11, 12) is arranged, which protrudes beyond the girder section (5, 6), and wherein the profile elements (3, 4) of the base body are connected to one another in a positively locking manner in the region of the lap joint (2), **characterized in that** in order to form the positively locking connection of the profile elements (3, 4), at least one of these profile elements (3, 4) has a recess (21) on the front side and the profile elements (3, 4) are telescoped in the region of this recess (21).

2. The climbing aid (1) according to claim 1, **characterized in that** both profile elements (3, 4) forming the positive fit have a recess (21) on the front side.

3. The climbing aid (1) according to claim 2, **characterized in that** one recess (21) of the positively locking connection is formed in one of the girder sections (5, 6) and the further recess (21) is formed in one of the climbing aid profile elements (11, 12).

4. The climbing aid (1) according to claim 1 or 2, **characterized in that** the profile elements (3, 4) lie flat against one another in the lap joint (2).

5. The climbing aid (1) according to one of claims 1 to 3, **characterized in that** the surfaces forming the lap joint (2) and/or the surfaces of the profile elements (3, 4) forming the positive fit are provided with a friction-enhancing coating.

6. A continuous track for a machine, with track plates, which have an upper side, wherein the upper side has a profiling with elevations, and with at least one climbing aid (1), which is arranged between two elevations of the profiling of the upper side of the track plates, and which has U-shaped holding elements (9, 10) for arranging the climbing aid (1) on the continuous track, which holding elements (9, 10) extend around the side edges of the track plates, **characterized in that** the climbing aid (1) is formed according to one of the preceding claims.

## Revendications

1. Aide à la montée (1) pour une machine avec une chenille, comprenant un corps de base qui est constitué d'éléments profilés (3, 4) reliés entre eux au niveau d'un joint à recouvrement (2), dans laquelle les éléments profilés (3, 4) comprennent un profilé porteur (5, 6) sur lequel est disposé un élément profilé d'aide à la montée (11, 12), qui dépasse du profilé porteur (5, 6) et dans lequel les éléments profilés (3, 4) du corps de base sont reliés entre eux par complémentarité de forme au niveau du joint à recouvrement (2), **caractérisé en ce que**, pour la formation de la liaison par complémentarité de forme des éléments profilés (3, 4), au moins un de ces éléments profilés (3, 4) comprend, face frontale, un évidement (21) et les éléments profilés (3, 4) sont insérés les uns dans les autres au niveau de cet évidement (21).

2. Aide à la montée (1) selon la revendication 1, **caractérisée en ce que** les deux éléments profilés (3, 4) formant la complémentarité de forme comprennent, sur leur face frontale, un évidement (21).

3. Aide à la montée (1) selon la revendication 2, **caractérisée en ce qu'**un évidement (21) de la liaison par complémentarité de forme est réalisée dans un des profilés porteurs (5, 6) et l'autre évidement (21) est réalisé dans un des éléments profilés de l'aide à la montée (11, 12).

4. Aide à la montée (1) selon la revendication 1 ou 2, **caractérisée en ce que** les éléments profilés (3, 4) s'appuient les uns contre les autres de manière plane dans le joint à recouvrement (2).

5. Aide à la montée (1) selon l'une des revendications 1 à 3, **caractérisée en ce que** les surfaces formant le joint à recouvrement (2) et/ou les surfaces formant la complémentarité de forme, des éléments profilés (3, 4) sont munies d'un revêtement augmentant la friction.

6. Chenille pour une machine, avec des patins qui présentent un côté supérieur, dans lequel le côté supérieur comprend un profilage avec des bossages, ainsi qu'avec au moins une aide à la montée (1) qui est disposée entre deux bossages du profilage du côté supérieur des patins, et des éléments de maintien en forme de U (9, 10) pour la disposition de l'aide à la montée (1) sur la chenille, qui entourent les bords latéraux des patins, **caractérisée en ce que** l'aide à la montée (1) est réalisée selon l'une des revendications précédentes.
